# EUROPÄISCHE PATENTSCHRIFT

(11) **EP 3 767 304 B1**
(45) Veröffentlichungstag und Bekanntmachung des Hinweises auf die Patenterteilung: **07.09.2022**
(21) Anmeldenummer: 20185363.7
(22) Anmeldetag: 10.07.2020
(51) Int. Cl.: G01P 1/02, G01D 11/24

(54) **MAGNETFELDSENSOR**
MAGNETIC FIELD SENSOR
CAPTEUR DE CHAMP MAGNÉTIQUE

(30) Priorität: 17.07.2019 DE 102019210571
(43) Veröffentlichungstag der Anmeldung: 20.01.2021
(73) Patentinhaber: Continental Automotive Technologies GmbH, 30165 Hannover (DE)
(72) Erfinder: Wahler, Torsten, 65824 Schwalbach a. Ts. (DE)
(74) Vertreter: Continental Corporation

(56) Entgegenhaltungen:
- EP-A1- 3 130 935
- EP-A1- 3 441 778
- DE-C1- 19 546 865

## Beschreibung

Die Erfindung bezieht sich auf einen, insbesondere stabförmigen, einen kreisförmigen Querschnitt aufweisenden Magnetfeldsensor mit einem ein Sensorelementgehäuseteil und ein Anschlusselementgehäuseteil aufweisenden Gerätegehäuse, wobei das Sensorelementgehäuseteil an einem ersten Sensorende des Magnetfeldsensors angeordnet ist und wobei das Sensorelementgehäuseteils axial beabstandet von dem ersten Sensorende einen umlaufenden Radialvorsprung mit einer zum ersten Sensorende hin offenen Ringnut aufweist.

Ein solcher Magnetfeldsensor ist zum Beispiel als sogenannter Geschwindigkeitsgeber oder Drehwertgeber für einen Fahrtschreiber in einem Kraftfahrzeug, insbesondere Nutzfahrzeug, bekannt. Der Magnetfeldsensor weist einen Sensorkopf auf und wird in ein Getriebegehäuse eines Getriebes des Kraftfahrzeugs eingeschraubt. Zur Abdichtung einer Einschrauböffnung des Getriebegehäuses gegenüber dem Magnetfeldsensor ist im montierten Zustand von Magnetfeldsensor und Getriebegehäuse ein O-Ring in die Ringnut des Magnetfeldsensors eingelegt.

Mittels des Sensorkopfes erfasst der Magnetfeldsensor eine Bewegung eines Getriebezahnrades des Getriebes. Die Bewegung des Getriebezahnrades ist ein Maß für die Geschwindigkeit des Kraftfahrzeugs. Ein Abschnitt des Sensorelementgehäuseteils ist Bestandteil des Sensorkopfes. Über einen das Anschlusselementgehäuseteil und Anschlusskontakte umfassenden Steckersockel wird der Magnetfeldsensor mit dem Fahrtschreiber des Kraftfahrzeugs verbunden. Aufgrund der erforderlichen hohen Zuverlässigkeit von mit dem Fahrtschreiber aufgezeichneten Daten ist es unter anderem von Bedeutung, eine Manipulation des Magnetfeldsensors und aus einer solchen Manipulation folgende Datenverfälschungen zu vermeiden.

Aus EP 3 441 778 A1 ist ein Magnetfeldsensor mit einem ein Sensorelementgehäuseteil und ein Anschlusselementgehäuseteil aufweisenden Gerätegehäuse bekannt. Eine Gerätegehäuseaußenseite des Gerätegehäuses weist einen eine Verzahnung des Anschlusselementgehäuseteils mit dem Sensorelementgehäuseteil aufweisenden Verzahnungsbereich auf. In dem Verzahnungsbereich ist an der Gerätegehäuseaußenseite ein die Verbindung von Anschlusselementgehäuseteil und Sensorelementgehäuseteil sicherndes Siegel auf dem Anschlusselementgehäuseteil und dem Sensorelementgehäuseteil angeordnet.

Aufgabe der Erfindung ist es, einen Magnetfeldsensor der eingangs genannten Art zu schaffen, der eine hohe Manipulationssicherheit aufweist.

Diese Aufgabe wird erfindungsgemäß gelöst mit einem die Merkmale des Anspruchs 1 aufweisenden Magnetfeldsensor.

Von besonderem Vorteil ist bei dem erfindungsgemäßen Magnetfeldsensor das Vorsehen des der Ringnut erfindungsgemäß zugeordneten Einstichs. Dadurch wird bei einem manipulativen Versuch, das Gerätegehäuse durch Auftrennen, zum Beispiel durch Aufbohren, in der Ringnut zu öffnen, um an das Innere des Magnetfeldsensors zu gelangen, auch der Einstich durchtrennt. Auf diese Weise ergeben sich von außen erkennbare Trennkanten in dem Sensorelementgehäuseteil, die auch nach einem erneuten Zusammenfügen des Sensorelementgehäuseteils nach dessen Auftrennen unverdeckt und sichtbar sind. Diese Sichtbarkeit wird im Einsatz des Magnetfeldsensors an einem Getriebe eines Kraftfahrzeugs gegebenenfalls zum Beispiel noch dadurch erhöht, dass kriechendes Getriebeöl aus dem Getriebe an dem O-Ring vorbei und an der Trennkante in den Einstich austritt.

Das Gerätegehäuse des erfindungsgemäßen Magnetfeldsensors weist eine Längsachse auf, wobei die Längsachse diejenige Achse des Gerätegehäuses ist, die der Richtung seiner größten Ausdehnung entspricht. Die Längsachse des Gerätegehäuses ist vorzugsweise auch die Längsachse des Magnetfeldsensors. Der Magnetfeldsensor kann dann insbesondere stabförmig ausgebildet sein. Es ist aber grundsätzlich auch denkbar, dass der Magnetfeldsensor zum Beispiel eine abgeknickte Form aufweist, wobei beispielsweise Anschlusskontakte eines Steckersockels des Magnetfeldsensors rechtwinkelig zu dem Gerätegehäuse angeordnet sind.

Das Gerätegehäuse des Magnetfeldsensors kann insbesondere zylindrisch ausgebildet sein. Dann ergibt sich ein zylindrischer Magnetfeldsensor. Die Angaben axial oder radial sowie Axialrichtung oder Radialrichtung beziehen sich auf die Längsachse des Gerätegehäuses.

Die Ringnut ist insbesondere vorgesehen, einen O-Ring aufzunehmen. Das heißt die Ringnut ist vorzugsweise zur Aufnahme eines O-Rings ausgebildet. Ein O-Ring ist ein Dichtring und zum Beispiel auch unter der Bezeichnung Rundschnurring bekannt.

Zusätzliche vorteilhafte Weiterbildungen der Erfindung sind in den Unteransprüchen angegeben.

Man könnte sich vorstellen, dass der Einstich des Sensorelementgehäuseteils, genauer der Einstich des Radialvorsprungs des Sensorelementgehäuseteils, zum Beispiel auf einen Umfangsabschnitt des Sensorelementgehäuseteils beschränkt ist oder dass mehrere, jeweils auf einen Umfangsabschnitt des Sensorelementgehäuseteils beschränkte Einstiche an dem Magnetfeldsensor vorhanden sind. Von besonderem Vorteil ist es hingegen, wenn gemäß einer Weiterbildung der Erfindung der Einstich eine radial um das Sensorelementgehäuseteil umlaufende Nut bildet. Bei einem Auftrennen des Gerätegehäuses in der Ringnut wird somit ein, insbesondere ringförmiger, Gehäuseteil des Sensorelementgehäuseteils vollständig von dem übrigen Sensorelementgehäuseteil abgetrennt.

Gemäß einer anderen vorteilhaften Weiterbildung der Erfindung ist eine Einstichtiefe des Einstichs mindestens so groß wie ein Abstand einer inneren seitlichen Nutwand der Ringnut von einer eine Einstichöffnung des Einstichs aufweisenden Oberfläche des Radialvorsprungs. Die innere seitliche Nutwand der Ringnut ist die der Längsachse des Gerätegehäuses zugewandte seitliche Nutwand der Ringnut. Auf diese Weise wird der Manipulationsschutz weiter erhöht, da ein Auftrennen des Gerätegehäuses in der Ringnut zuverlässig zu einer Trennkante an dem Einstich führt.

Der Manipulationsschutz wird zusätzlich weiter erhöht, wenn gemäß einer anderen vorteilhaften Weiterbildung der Erfindung ein Einstichgrund des Einstichs im Querschnitt eine Rundung aufweist. Eine Trennkante in einer Rundung ist besonders gut erkennbar. Die Rundung könnte zum Beispiel ein Ellipsenabschnitt sein und ist vorzugsweise kreissegmentförmig. Von besonderem Vorteil ist es, wenn der Einstichgrund keinen ebenen Abschnitt oder Bereich aufweist, sondern vollständig ausgerundet ist.

Es ist denkbar, dass der Radialvorsprung zum Beispiel ringförmig an dem Sensorelementgehäuseteil angeordnet ist. Besonders vorteilhaft für eine kompakte Bauform des Magnetfeldsensors, die eine mögliche Manipulation des Magnetfeldsensors zusätzlich erschwert, ist es hingegen, wenn gemäß einer anderen Weiterbildung der Erfindung der Radialvorsprung einen stufenförmigen Absatz in der Außenkontur des Sensorelementgehäuseteils bildet.

Einer anderen vorteilhaften Weiterbildung der Erfindung entsprechend ist das Sensorelementgehäuseteil topfförmig ausgebildet. Auf diese Weise wird ein unerlaubter Zugriff auf das Innere des Magnetfeldsensors weiter erschwert.

Einer vorteilhaften Weiterbildung der Erfindung entsprechend ist das Sensorelementgehäuseteil zwischen dem Radialvorsprung und dem ersten Sensorende als Gehäusetopf ausgebildet, wobei der Gehäusetopf ein Sensorelement aufnimmt. Auf diese Weise ist das Sensorelement besonders gut vor manipulativen Angriffen geschützt. Das Sensorelement, das insbesondere eine Hall-Sonde sein kann, ist vorzugsweise auf einer Leiterplatte angeordnet. Die Leiterplatte kann zum Beispiel das Sensorelementgehäuseteil in dessen Längsrichtung nahezu vollständig durchgreifen. Vorzugsweise kann die Leiterplatte an dem Anschlusselementgehäuseteil und/oder einem Steckersockel angebracht sein.

Gemäß einer anderen vorteilhaften Weiterbildung der Erfindung besteht das Sensorelementgehäuseteil aus einem Metall. Damit werden zum einen vorteilhaft Manipulationen weiter erschwert und zum anderen besteht ein besonders guter Schutz insbesondere des Sensorelements gegenüber aggressiven Umweltbedingungen wie sie zum Beispiel in einem Getriebe eines Kraftfahrzeugs vorherrschen können. Insbesondere kann das Sensorelementgehäuseteil aus einer Aluminiumlegierung bestehen.

Einer anderen vorteilhaften Weiterbildung der Erfindung gemäß ist das Anschlusselementgehäuseteil in Richtung einer Längsachse des Gerätegehäuses zumindest teilweise in dem Sensorelementgehäuseteil angeordnet, und das Anschlusselementgehäuseteil und das Sensorelementgehäuseteil sind mittels einer Bördelung verbunden. Damit lässt sich der Magnetfeldsensor gut herstellen, und es wird ein weiter verbesserter Manipulationsschutz ermöglicht. Die Bördelung entsteht bei einer Herstellung des Magnetfeldsensors vorzugsweise dadurch, dass ein dünnwandiger Ringbereich an dem Sensorelementgehäuseteil über einen Kragen an dem Anschlusselementgehäuseteil umgebogen, nämlich umgebördelt, wird. Vorzugsweise ist der Werkstoff für das Sensorelementgehäuseteil derart ausgebildet, dass er ein mehrmaliges Auf- und Zusammenbiegen, wie es beispielsweise bei einem Öffnen und Schließen der Bördelung erfolgen würde, nicht zulässt. Insbesondere ist der Werkstoff derart ausgebildet, dass es bereits bei einem einmaligen Öffnen der Bördelung zu sichtbaren Brüchen in dem Material kommt.

Gemäß der Erfindung ist ein Innendurchmesser des Sensorelementgehäuseteils mindestens so groß wie ein Innendurchmesser der Ringnut. Vorzugsweise ist der Innendurchmesser des Sensorelementgehäuseteils mindestens so groß wie ein Außendurchmesser der Ringnut. Der hohe Manipulationsschutz des Magnetfeldsensors wird mit solchen Weiterbildungen besonders gut zur Geltung gebracht.

Die Erfindung umfasst auch die Kombinationen der Merkmale der beschriebenen Ausführungsformen.

Ausführungsbeispiele der Erfindung werden im Folgenden anhand der Zeichnung näher beschrieben. In der Zeichnung zeigen in skizzenhafter, schematisierter Darstellung:
- Fig. 1: eine Seitenansicht eines Magnetfeldsensors,
- Fig. 2: eine Schnittansicht des Magnetfeldsensors nach Fig. 1,
- Fig. 3: eine Seitenansicht eines Sensorelementgehäuseteils und
- Fig. 4: eine Schnittansicht des Sensorelementgehäuseteils nach Fig. 3.

Sich jeweils entsprechende Elemente sind in allen Figuren mit gleichen Bezugszeichen versehen.

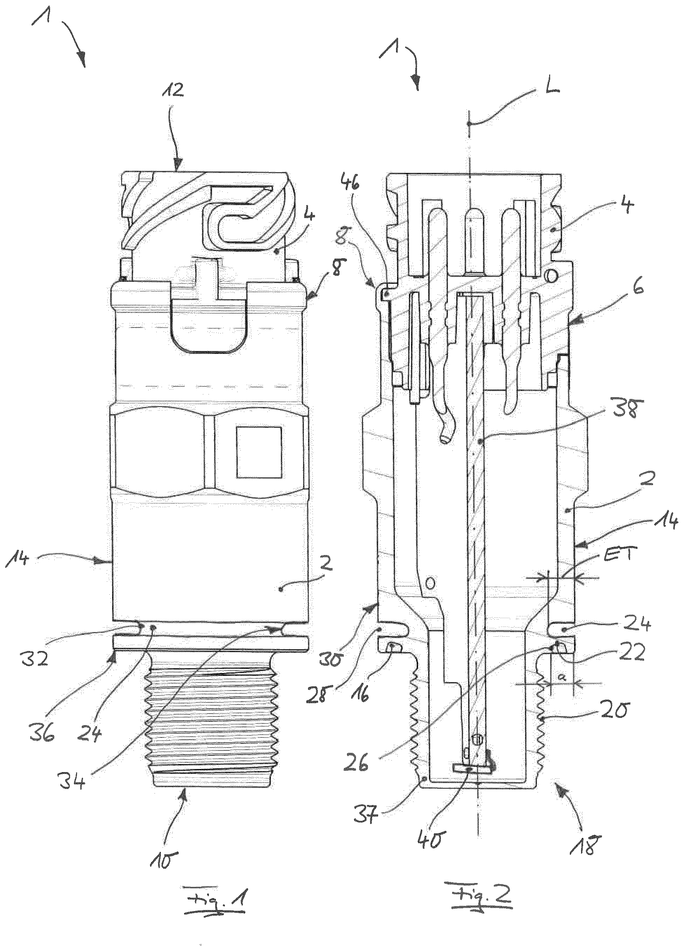

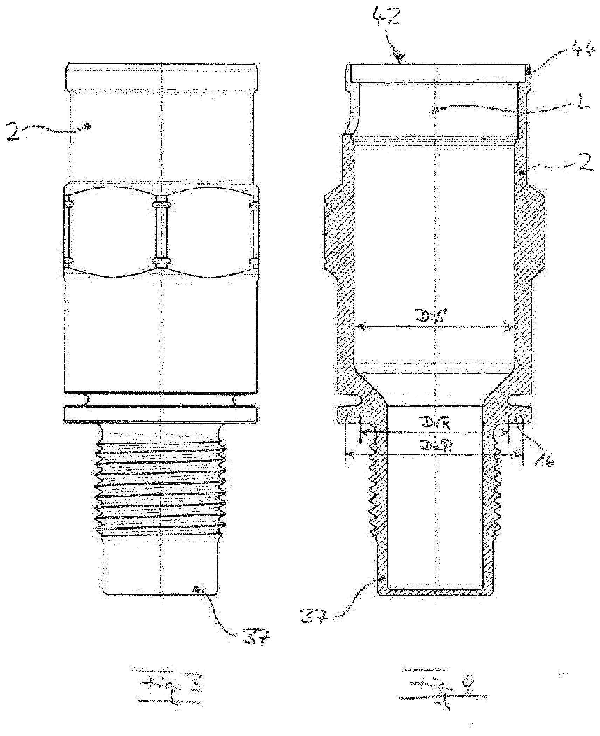

Fig. 1 zeigt einen stabförmigen, einen kreisförmigen Querschnitt aufweisenden Magnetfeldsensor 1 mit einem ein Sensorelementgehäuseteil 2 (vgl. Fig. 3, 4) und ein Anschlusselementgehäuseteil 4 aufweisenden Gerätegehäuse 6. Das Sensorelementgehäuseteil 2 und das Anschlusselementgehäuseteil 4 bilden gemeinsam das Gerätegehäuse 6 (vgl. Fig. 2). Das Anschlusselementgehäuseteil 4 und das Sensorelementgehäuseteil 2 sind mittels einer Bördelung 8 verbunden.

Wie insbesondere aus Fig. 2 deutlich wird, ist das Anschlusselementgehäuseteil 4 in Richtung einer Längsachse L des Gerätegehäuses 6 teilweise in dem Sensorelementgehäuseteil 2 angeordnet. Die Längsachse L des Gerätegehäuses 6 ist auch die Längsachse L des Magnetfeldsensors 1. Der Magnetfeldsensor 1 ist stabförmig und zylindrisch ausgebildet.

Das Sensorelementgehäuseteil 2 ist an einem ersten Sensorende 10 des Magnetfeldsensors 1 angeordnet. An einem dem ersten Sensorende 10 abgewandten zweiten Sensorende 12 ist das Anschlusselementgehäuseteil 4 angeordnet.

Axial beabstandet von dem ersten Sensorende 10 weist das Sensorelementgehäuseteil 2 einen umlaufenden Radialvorsprung 14 mit einer zum ersten Sensorende 10 hin offenen Ringnut 16 auf. Die Ringnut 16 ist ausgebildet zur Aufnahme eines hier nicht dargestellten O-Rings. Der Magnetfeldsensor 1 ist ausgebildet zum Einbau in ein hier nicht dargestelltes Getriebegehäuse eines Getriebes eines Kraftfahrzeugs. Dazu weist der Magnetfeldsensor 1 an einem Sensorkopf 18 ein Außengewinde 20 auf.

Mittels des Außengewindes 20 wird der Magnetfeldsensor 1 in eine Einschrauböffnung des Getriebegehäuses eingeschraubt. In einem an dem Getriebe montierten Zustand des Magnetfeldsensors 1 dichtet ein in die Ringnut 16 eingelegter O-Ring das Getriebegehäuse gegenüber dem Magnetfeldsensor 1 ab.

Axial beabstandet von einem Nutgrund 22 der Ringnut 16 weist der Radialvorsprung 14 einen in Radialrichtung den Nutquerschnitt der Ringnut 16 zumindest teilweise übergreifenden Einstich 24 auf. In diesem Ausführungsbeispiel bildet der Einstich 24 eine radial um das Sensorelementgehäuseteil 2 umlaufende Nut. Dabei ist eine Einstichtiefe ET des Einstichs 24 hier so groß wie ein Abstand a einer inneren seitlichen Nutwand 26 der Ringnut 16 von einer eine Einstichöffnung 28 des Einstichs 24 aufweisenden Oberfläche 30 des Radialvorsprungs 14. Grundsätzlich ist die Einstichtiefe ET vorzugsweise mindestens so groß wie der Abstand a der inneren seitlichen Nutwand 26 von der Oberfläche 30 des Radialvorsprungs 14.

Wird versucht, das Gerätegehäuse 6 beispielsweise durch Aufbohren der Ringnut 16 in Längsrichtung des Gerätegehäuses 6 zu trennen, so wird der radiale Einstich 24 durchfahren, und ein Abschnitt des Gerätegehäuses 6, hier genauer des Sensorelementgehäuseteils 2 des Gerätegehäuses 6, wird vollständig abgetrennt. Somit fehlt nach dem Aufbohren ein Stück des Gerätegehäuses 6. Dieses Stück wieder nachzubilden erfordert einen hohen Aufwand und erschwert somit eine Manipulation erheblich.

Es ist zu erkennen, dass ein Einstichgrund 32 des Einstichs 24 im Querschnitt eine Rundung 34 aufweist. In diesem Ausführungsbeispiel ist der Einstichgrund 32 vollständig ausgerundet, und die Rundung 34 ist kreissegmentförmig ausgebildet.

In diesem Ausführungsbeispiel bildet der Radialvorsprung 14 einen stufenförmigen Absatz 36 in der Außenkontur des Sensorelementgehäuseteils 2. Zwischen dem Radialvorsprung 14 und dem ersten Sensorende 10, hier genauer zwischen dem Absatz 36 und dem ersten Sensorende 10, ist das Sensorelementgehäuseteil 2 als Gehäusetopf 37 ausgebildet, wobei der Gehäusetopf 37 ein auf einer Leiterplatte 38 angeordnetes Sensorelement 40 aufnimmt. Der Gehäusetopf 37 mit unter anderem dem Sensorelement 40 bildet somit den Sensorkopf 18.

Fig. 3, 4 zeigen ein Sensorelementgehäuseteil 2, das zum Beispiel für einen Magnetfeldsensor 1 nach Fig. 1, 2 vorgesehen sein kann. An einem Sensorelementgehäuseteilende 42, das einem als Gehäusetopf 37 ausgebildeten Ende des Sensorelementgehäuseteils 2 abgewandt ist, wird bei einer Herstellung des Magnetfeldsensors 1 das Sensorelementgehäuseteil 2 mit einem Anschlusselementgehäuseteil 4 (vgl. Fig. 1, 2) gefügt. Danach wird ein endseitiger Rand 44 des Sensorelementgehäuseteils 2 um eine Bördelkontur 46, die hier ein Kragen ist, des Anschlusselementgehäuseteils 4 umgebördelt. Damit wird das Innere des Magnetfeldsensors 1, das unter anderem die Leiterplatte 38 mit dem Sensorelement 40 und weiteren elektrischen Bauteilen aufweist, sicher verschlossen.

Das Sensorelementgehäuseteil 2 besteht in diesem Ausführungsbeispiel aus einem Metall. Beispielsweise kann das Sensorelementgehäuseteil 2 aus einer Aluminiumlegierung bestehen. Wie insbesondere aus Fig. 4 deutlich wird, ist ein Innendurchmesser DiS des Sensorelementgehäuseteils 2 größer als ein Innendurchmesser DiR der Ringnut 16. Die Größe des Innendurchmesser DiS des Sensorelementgehäuseteils 2 liegt etwa mittig zwischen der Größe des Innendurchmesser DiR der Ringnut 16 und der Größe des Außendurchmessers DaR der Ringnut 16.

Insgesamt zeigt das Beispiel, wie durch die Erfindung ein Magnetfeldsensor bereitgestellt werden kann, dessen Manipulationsmöglichkeit erheblich erschwert ist.

## Patentansprüche

1. Einen kreisförmigen Querschnitt aufweisender, insbesondere stabförmiger, Magnetfeldsensor (1) mit einem ein Sensorelementgehäuseteil (2) und ein Anschlusselementgehäuseteil (4) aufweisenden Gerätegehäuse (6), wobei das Sensorelementgehäuseteil (2) an einem ersten Sensorende (10) des Magnetfeldsensors (1) angeordnet ist und wobei das Sensorelementgehäuseteil (2) axial beabstandet von dem ersten Sensorende (10) einen umlaufenden Radialvorsprung (14) mit einer zum ersten Sensorende (10) hin offenen Ringnut (16) aufweist, **dadurch gekennzeichnet, dass** der Radialvorsprung (14) axial beabstandet von einem Nutgrund (22) der Ringnut (16) einen in Radialrichtung den Nutquerschnitt der Ringnut (16) zumindest teilweise übergreifenden Einstich (24) aufweist, wodurch bei einem manipulativen Versuch, das Gerätegehäuse durch Auftrennen in der Ringnut zu öffnen, um an das Innere des Magnetfeldsensors zu gelangen, auch der Einstich durchtrennt wird und sich auf diese Weise von außen erkennbare Trennkanten in dem Sensorelementgehäuseteil, die auch nach einem erneuten Zusammenfügen des Sensorelementgehäuseteils nach dessen Auftrennen unverdeckt und sichtbar sind, ergeben, und dass ein Innendurchmesser (DiS) des Sensorelementgehäuseteils (2) mindestens so groß ist wie ein Innendurchmesser (DiR) der Ringnut (16).

2. Magnetfeldsensor nach Anspruch 1, **dadurch gekennzeichnet, dass** der Einstich (24) eine radial um das Sensorelementgehäuseteil (2) umlaufende Nut bildet.

3. Magnetfeldsensor nach Anspruch 1 oder 2, **dadurch gekennzeichnet, dass** eine Einstichtiefe (ET) des Einstichs (24) mindestens so groß ist wie ein Abstand (a) einer inneren seitlichen Nutwand (26) der Ringnut (16) von einer eine Einstichöffnung (28) des Einstichs (24) aufweisenden Oberfläche (30) des Radialvorsprungs (14).

4. Magnetfeldsensor nach einem der vorhergehenden Ansprüche, **dadurch gekennzeichnet, dass** ein Einstichgrund (32) des Einstichs (24) im Querschnitt eine Rundung aufweist.

5. Magnetfeldsensor nach einem der vorhergehenden Ansprüche, **dadurch gekennzeichnet, dass** der Radialvorsprung (14) einen stufenförmigen Absatz (36) in der Außenkontur des Sensorelementgehäuseteils (2) bildet.

6. Magnetfeldsensor nach einem der vorhergehenden Ansprüche, **dadurch gekennzeichnet, dass** das Sensorelementgehäuseteil (2) topfförmig ausgebildet ist.

7. Magnetfeldsensor nach Anspruch 6, **dadurch gekennzeichnet, dass** das Sensorelementgehäuseteil (2) zwischen dem Radialvorsprung (14) und dem ersten Sensorende (10) als Gehäusetopf (37) ausgebildet ist, wobei der Gehäusetopf (37) ein Sensorelement (40) aufnimmt.

8. Magnetfeldsensor nach einem der vorhergehenden Ansprüche, **dadurch gekennzeichnet, dass** das Sensorelementgehäuseteil (2) aus einem Metall besteht.

9. Magnetfeldsensor nach einem der vorhergehenden Ansprüche, **dadurch gekennzeichnet, dass** das Anschlusselementgehäuseteil (4) in Richtung einer Längsachse (L) des Gerätegehäuses (6) zumindest teilweise in dem Sensorelementgehäuseteil (2) angeordnet ist und dass das Anschlusselementgehäuseteil (4) und das Sensorelementgehäuseteil (2) mittels einer Bördelung (8) verbunden sind.

## Claims

1. Magnetic field sensor (1) having a circular cross section, in particular in the form of a rod, with a device housing (6) having a sensor element housing part (2) and a connection element housing part (4), wherein the sensor element housing part (2) is arranged at a first sensor end (10) of the magnetic field sensor (1) and wherein the sensor element housing part (2) has, at an axial distance from the first sensor end (10), an encircling radial projection (14) with an annular groove (16) open to the first sensor end (10), **characterized in that** the radial projection (14) has, at an axial distance from a groove base (22) of the annular groove (16), a recess (24) which at least partially extends over the groove cross section of the annular groove (16) in the radial direction, as a result of which, in the event of attempted manipulation to open the device housing by separation in the annular groove in order to reach the interior of the magnetic field sensor, the recess is also cut and this produces separation edges in the sensor element housing part which are identifiable from the outside and remain uncovered and visible after the sensor element housing part has been put together again after having been separated, and **in that** an inside diameter (DiS) of the sensor element housing part (2) is at least as large as an inside diameter (DiR) of the annular groove (16).

2. Magnetic field sensor according to Claim 1, **characterized in that** the recess (24) forms a groove which radially encircles the sensor element housing part (2).

3. Magnetic field sensor according to Claim 1 or 2, **characterized in that** a recess depth (ET) of the recess (24) is at least as large as a distance (a) between an inner lateral groove wall (26) of the annular groove (16) and a surface (30) of the radial projection (14) having a recess opening (28) of the recess (24).

4. Magnetic field sensor according to one of the preceding claims, **characterized in that** a recess base (32) of the recess (24) has a rounded cross section.

5. Magnetic field sensor according to one of the preceding claims, **characterized in that** the radial projection (14) forms a step-shaped shoulder (36) in the outer contour of the sensor element housing part (2).

6. Magnetic field sensor according to one of the preceding claims, **characterized in that** the sensor element housing part (2) is of pot-like design.

7. Magnetic field sensor according to Claim 6, **characterized in that** the sensor element housing part (2) is formed as a housing pot (37) between the radial projection (14) and the first sensor end (10), wherein the housing pot (37) receives a sensor element (40).

8. Magnetic field sensor according to one of the preceding claims, **characterized in that** the sensor element housing part (2) consists of a metal.

9. Magnetic field sensor according to one of the preceding claims, **characterized in that** the connection element housing part (4) is arranged at least partially in the sensor element housing part (2) in the direction of a longitudinal axis (L) of the device housing (6), and **in that** the connection element housing part (4) and the sensor element housing part (2) are connected by means of a beading (8).

## Revendications

1. Capteur de champ magnétique (1), en particulier en forme de barre, ayant une section transversale circulaire, ledit capteur comprenant un boîtier d'appareil (6) qui comporte une partie de boîtier d'élément de capteur (2) et une partie de boîtier d'élément de raccordement (4), la partie de boîtier d'élément de capteur (2) étant disposée à une première extrémité de capteur (10) du capteur de champ magnétique (1) et la partie de boîtier d'élément de capteur (2) comportant à une distance axiale de la première extrémité de capteur (10) une saillie radiale circonférentielle (14) pourvue d'une rainure annulaire (16) ouverte en direction la première extrémité de capteur (10), **caractérisé en ce que** la saillie radiale (14) comporte, à une distance axiale d'un fond (22) de la rainure annulaire (16), une encoche (24) qui recouvre au moins partiellement la section transversale de la rainure annulaire (16) dans une direction radiale, de sorte que, lors d'une tentative de manipulation pour ouvrir le boîtier d'appareil par séparation dans la rainure annulaire afin de parvenir à l'intérieur du capteur de champ magnétique, l'encoche est également coupée et des bords de séparation visibles de l'extérieur sont générés dans la partie de boîtier d'élément de capteur, lesquels sont découverts et visibles même après que la partie de boîtier d'élément de capteur a été réassemblée après avoir été séparée, et **en ce qu'**un diamètre intérieur (DiS) de la partie de boîtier d'élément de capteur (2) est au moins égal à un diamètre intérieur (DiR) de la rainure annulaire (16).

2. Capteur de champ magnétique selon la revendication 1, **caractérisé en ce que** l'encoche (24) forme une rainure qui s'étend radialement autour de la partie de logement d'élément capteur (2).

3. Capteur de champ magnétique selon la revendication 1 ou 2, **caractérisé en ce qu'**une profondeur (ET) de l'encoche (24) est au moins égale à une distance (a) d'une paroi de rainure latérale intérieure (26) de la rainure annulaire (16) à partir d'une surface (30), comportant une ouverture (28) de l'encoche (24), de la saillie radiale (14).

4. Capteur de champ magnétique selon l'une des revendications précédentes, **caractérisé en ce qu'**un fond (32) de l'encoche (24) comporte un arrondi en section transversale.

5. Capteur de champ magnétique selon l'une des revendications précédentes, **caractérisé en ce que** la saillie radiale (14) forme un épaulement étagé (36) dans le contour extérieur de la partie de boîtier d'élément de capteur (2).

6. Capteur de champ magnétique selon l'une des revendications précédentes, **caractérisé en ce que** la partie de boîtier d'élément de capteur (2) est en forme de pot.

7. Capteur de champ magnétique selon la revendication 6, **caractérisé en ce que** la partie de boîtier d'élément de capteur (2) est conçue sous la forme d'un pot de boîtier (37) entre la saillie radiale (14) et la première extrémité de capteur (10), le pot de boîtier (37) recevant un élément de capteur (40).

8. Capteur de champ magnétique selon l'une des revendications précédentes, **caractérisé en ce que** la partie de boîtier d'élément de capteur (2) comprend un métal.

9. Capteur de champ magnétique selon l'une des revendications précédentes, **caractérisé en ce que** la partie de boîtier d'élément de raccordement (4) est disposée au moins partiellement dans la partie de boîtier d'élément de capteur (2) en direction d'un axe longitudinal (L) du boîtier d'appareil (6) et **en ce que** la partie de boîtier d'élément de raccordement (4) et la partie de boîtier d'élément de capteur (2) sont reliées au moyen d'un bord rabattu (8).
